# EUROPEAN PATENT APPLICATION

(11) **EP 1 672 008 A1**
(43) Date of publication of application: **21.06.2006**
(21) Application number: 05023744.5
(22) Date of filing: 31.10.2005
(51) Int. Cl.: C08J 5/18, C08K 3/00, C08K 3/22, C08K 3/38, B32B 27/34

(54) **Thermally conductive polyimide film composites having high mechanical elongation useful as a heat conducting portion of an electronic device**

(30) Priority: 15.12.2004 US 12475
(71) Applicant: E.I. du Pont de Nemours and Company, Wilmington, DE 19898 (US)
(72) Inventor: Meloni, Paul Arthur, League City, Texas 77573 (US)
(74) Representative: Bailey, Lindsey

(57) **Abstract**

In electronic devices, heat removal is an important consideration of any device designer. Thermally conductive, high-temperature polyimide composites are disclosed herein which are generally useful as a dielectric layer in an electronic device, or a precursor metal-laminate, where the dielectric is layered on one side (or on both sides) with a metal. The polyimide composites of the present invention contain dispersed therein thermally conductive filler particles where the polyimide is derived in part from a polysiloxane diamine. These film composites have good mechanical elongation, good dielectric strength, and optionally good adhesivity (i.e. laminatability) (i.e. laminatability) and low modulus, while also possessing good thermal conductivity.

## Description

### FIELD OF THE INVENTION

The present invention is directed to thermally conductive polyimide composites useful as a sheet adhesive, and/or a base substrate, in an electronic device or similar-type application. These electronic devices can be made from a sheet laminate comprising a highly filled, polyimide composite layer and a metal layer where the metal is on one side, or two sides, of the polyimide composite layer. More specifically, the polyimide composite layer of the present invention can be used as a dielectric and comprise an inorganic filler material dispersed in a polyimide binder where the filler conducts thermal energy. In order to lower the modulus (i.e. maintain good flexibility) of the polyimide composite layer, the polyimides of the present invention are derived from a dianhydride component and a diamine component where the diamine component comprises from 1 to 15 weight-percent polysiloxane diamine.

### BACKGROUND OF THE INVENTION

Metal oxide particles, particularly boron, alumina, aluminum-nitride, and boron-nitride, are known to have good thermal conductivity and are used as fillers in many polymer binders, including polyimides. Sub-micron size aluminum oxide particles for example are commonly used as a filler material in commercial applications requiring thermal conductivity (and/or reduced thermal impedance) in a polyimide sheet.

U.S. Pat. No. 6,208,631 to Fraivillig teaches an improved thermal conductivity laminate using a thermally conductive polyimide film comprising aluminum oxide particles (dispersed in the polyimide matrix), the composite matrix being layered onto a metal substrate using a separate adhesive layer.

U.S. Pat. No. 6,410,971 to Otey discloses a thermoelectric module device employing a polyimide film having no thermatty conductive filler material therein where the unfilled polyimide film is used to conduct heat (relatively poorly) from an adjacent ceramic substrate.

Numerous low-Tg polyimides (i.e. adhesive-type polyimides) have been used as sheet adhesives in flexible circuit packages and other electronic device applications. However, many low-Tg polyimides (i.e. typically called 'thermoplastic' polyimide), when highly filled with an inorganic filler material can lose their flexibility (and flex-life) and can exhibit low mechanical elongation. Oftentimes, these films become so brittle that the laminates formed therefrom are difficult to handle, and cannot be processed easily by downstream flexible-board fabricators.

The purpose of the present invention is to disclose a polyimide composite film that is thermally conductive, has good adhesivity (i.e. laminatability) (i.e. laminatability) (i.e. may be used as a stand-alone sheet adhesive), has good mechanical elongation, and maintains long flex-life.

### SUMMARY OF THE INVENTION

The present invention is directed to polyimide film composites having a low glass transition temperature and good flex-life (i.e. high mechanical elongations) while exhibiting good thermal conductivity. These composite films are particularly useful as a thermally conductivity dielectric layer in an electronic, device.

The composites of the present invention comprise a polyimide binder having dispersed therein thermally conductive filler particles. The weight loading of filler component in the polyimide binder component is between and including any two of the following numbers 30, 35, 40, 45, 50, 55, 60, 65, 70, 75, 80, or 85, weight percent.

The polyimide binders of the present invention can have a glass transition temperature of between and including any two of the following numbers, 250, 240, 230, 220, 210, 200, 190, 180, 170, 160, 150, 140, 130, 120, 110 and 100°C. These polyimides are derived from a dianhydride component and a diamine component where the dianhydride component is typically any aromatic, aliphatic, or cycloaliphatic dianhydride, and where the diamine component comprises about 1 to 15 weight-percent polysiloxane diamine and about 85 to 99 weight-percent of either an aromatic diamine, an aliphatic diamine, a cycloaliphatic diamine, or any combination thereof.

The thermally conductive fillers of the present invention (i.e. those fillers dispersed in the polyimide binder material) generally have an average particle size (in the binder) in a range between and including any two of the following sizes: 100, 125, 150, 175, 200, 250, 300, 350, 400, 450, 500, 1000, 2000, 3000, 4000, and 5000 nanometers, where at feast 80, 85, 90, 92, 94, 95, 96, 98, 99 or 100 weight-percent of the dispersed filler is within the above defined size range(s).

The thermally conductive fillers of the present invention are typically selected from the group comprising, aluminum oxide, silica, boron nitride, boron nitride coated aluminum oxide, granular alumina, granular silica, fumed silica, silicon carbide, aluminum nitride, aluminum oxide coated aluminum nitride, titanium dioxide, dicalcium phosphate, barium titanate and combinations thereof.

The polyimide film composites of the present invention are typically in the form of a thin film having a thickness ranging from about 2, 5, 10, 15, 20, 25, 30, 35, 40, 50, 60, 70, 80, 90, 100, 150, 200, 250 and 300 microns.

The composite films of the present invention have a relatively low-Tg (i.e. resulting in good adhesivity (i.e. laminatability) (i.e. laminatability) to other materials) and good thermal conductivity. The thermal conductivity of these films is generally between and including any two of the following numbers 0.2, 0.4, 0.5, 0.6, 0.7, 0.8, 0.9, 1.0, 1.1, 1.2, 1.3, 1.4, 1.5, 1.6, 1.7, 1.8, 1.9, 2.0, 4.0, 6.0, 8.0, 10.0, 20.0, 50.0, 100, 150 and 200 watts/(meter*K).

In addition, the composites of the present invention have relatively high mechanical elongation. Typically, the mechanical elongation of these film composites is between and including any two of the following numbers 5, 10, 20, 30, 40, 50, 60, 70, 80, 90, 100, 110, 120, 130, 140 and 150 percent.

The composites of the present invention are excellent dielectrics that can be useful in forming a polyimide-metal laminate, or may also be used as a stand-alone film in other designs requiring good thermal conductivity from a dielectric.

Generally, the thermally conductive polyimide film composites of the present invention are useful as a single layer base substrate (a dielectric) in an electronic device requiring good thermal conductivity of the dielectric material. Examples of such electronic devices include (but are not limited) thermoelectric modules, thermoelectric coolers, DC/AC and AC/DC inverters, DC/DC and AC/AC converters, power amplifiers, voltage regulators, igniters, light emitting diodes, IC packages, and the like.

### DETAILED DESCRIPTION OF THE PREFERRED EMBODIMENT(S)

Overview. The polyimide composites of the present invention comprise (i.) a low-Tg polyimide binder component, and (ii.) an inorganic filler component capable of conducting thermal energy. These components will be described individually, then described together as a composite material.

Polyimide Binders. Useful high dielectric strength polyimide binders of the present invention are derived from a dianhydride component (or the corresponding diacid-diester, diacid halide ester, or tetra-carboxylic acid derivative of the dianhydride) and a diamine component. The dianhydride component is typically any aromatic, aliphatic, or cycloaliphatic dianhydride. The diamine component is typically any aromatic, aliphatic, or cycloaliphatic diamine.

The diamine component of the present invention comprises at least 1 to 15 weight-percent of a polysiloxane diamine. As used herein, polysiloxane diamine is intended to mean a diamine having at least one polysiloxane moiety (e.g. shown in brackets in the formula below). For example, a useful polysiloxane diamine can have the general formula:

NH₂-R₁-O-[SiR'R"-O-]ₘ-R₁-NH₂

where R' and R" are -(CH₃) or -(C₆H₅), where R₁ is -(CH₂)-ₙ and where n is equal to about 1 to 10 (preferably about 3), and where m is 1 to 40 but can be 1 to 12, or can be 8-10.

In one embodiment of the present invention, the polysiloxane diamine is a particular diamine known as poly(dimethylsiloxane), bis(3-aminopropyl) terminated.

One particular polysiloxane diamine has the structure of the formula below, 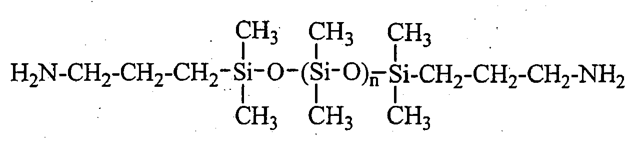 where n is equal to from 1 to 40, or from 5 to 20, or from 9 to 10 (i.e. G₉ or G₁₀). A polysiloxane diamine can herein be denoted by the simplistic notation "Gm", where "m" is the number of repeat-siloxane functional groups, where R' and R" are -(CH₃)- and where R₁ is -(CH₂-CH₂-CH₂)-.

In the embodiments of the present invention, the diamine component of the polyimide comprises a both a polysiloxane diamine used in conjunction with a second diamine. In one embodiment of the present invention, the second diamine is an aromatic diamine. The second diamine (i.e. the diamine making up the remainder of the total diamine component) is typically present from about 99, 98, 97, 95, 90, 80, 70, 60, 50, 40, 30, 20, or 15 weight-percent of the total diamine component. The second diamine can be an aromatic diamine, an aliphatic diamine, or a combination of the two.

Useful aromatic diamines for example, are selected from the group comprising,
1. 2,2 bis-(4-aminophenyl) propane;
2. 4,4'-diaminodiphenyl methane;
3. 4,4'-diaminodiphenyl sulfide (4,4'-DDS);
4. 3,3'-diaminodiphenyl sulfone (3,3'-DDS);
5. 4,4'-diaminodiphenyl sulfone;
6. 4,4'-diaminodiphenyl ether (4,4'-ODA);
7. 3,4'-diaminodiphenyl ether (3,4'-ODA);
8. 1,3-bis-(4-aminophenoxy) benzene (APB-134 or RODA);
9. 1,3-bis- (3-aminophenoxy) benzene (APB-133);
10. 1,2-bis- (4-aminophenoxy) benzene;
11. 1,2-bis- (3-aminophenoxy) benzene;
12. 1,4-bis-(4-aminophenoxy) benzene;
13. 1,4-bis-(3-aminophenoxy) benzene;
14. 1,5-diaminonaphthalene;
15. 1,8-diaminonaphthalene;
16. 2,2'-bis(trifluoromethyl)benzidine;
17. 4,4'-diaminodiphenyldiethylsilane;
18. 4,4'-diaminodiphenylsilane;
19. 4,4'-diaminodiphenylethylphosphine oxide;
20. 4,4'-diaminodiphenyl-N-methyl amine;
21. 4,4'-diaminodiphenyl-N-phenyl amine;
22. 1,2-diaminobenzene (OPD);
23. 1,3-diaminobenzene (MPD);
24. 1,4-diaminobenzene (PPD);
25. 2,5-dimethyl-1,4-diaminobenzene;
26. 2-(trifluoromethyl)-1,4-phenyleinediamine;
27. 5-(trifluoromethyl)-1,3-phenylenediamine;
28. 2,2-Bis[4-(4-aminophenoxy)phenyl]-hexafluoropropane (BDAF);
29. 2,2-bis(3-aminophenyl) 1,1,1,3,3,3-hexafluoropropane;
30. benzidine;
31. 4,4'-diaminobenzophenone;
32. 3,4'-diaminobenzophenone;
33. 3,3'-diaminobenzophenone;
34. m-xylylene diamine;
35. bisaminophenoxyphenylsulfone;
36. 4,4'-isopropylidenedianiline;
37. N,N-bis- (4-aminophenyl) methylamine;
38. N,N-bis- (4-arrilnophenyl) aniline
39. 3,3'-dimethyl-4,4'-diaminobiphenyl;
40. 4-aminophenyl-3-aminobenzoate;
41. 2,4-diaminotoluene;
42. 2,5-diaminotoluene;
43. 2,6-diaminotoluene;
44. 2,4-diamine-5-chlorotoluene;
45. 2,4-diamine-6-chlorotoluene;
46. 4-chloro-1,2-phenylenediamine;
47. 4-chloro-1,3-phenylenediamine;
48. 2,4-bis- (beta-amino-t-butyl) toluene;
49. bis-(p-beta-amino-t-butyl phenyl) ether;
50. p-bis-2- (2-methyl-4-aminopentyl) benzene;
51. 1-(4-aminophenoxy)-3-(3-aminophenoxy) benzene;
52. 1-(4-aminophenoxy)-4-(3-aminophenoxy) benzene;
53. 2,2-bis-[4-(4-aminophenoxy)phenyl] propane (BAPP);
54. bis-[4-(4-aminophenoxy)phenyl] sulfone (BAPS);
55. 2,2-bis[4-(3-aminophenoxy)phenyl] sulfone (m-BAPS);
56. 4,4'-bis-(aminophenoxy)biphenyl (BAPB);
57. bis-(4-[4-aminophenoxy]phenyl) ether (BAPE);
58. 2,2'-bis-(4-aminophenyl)-hexafluoropropane (6F diamino);
59. bis(3-aminophenyl)-3,5-di(trifluoromethyl)phenylphosphine oxide
60. 2,2'-bis-(4-phenoxy aniline) isopropylidene;
61. 2,4,6-trimethyl-1,3-diaminobenzene;
62. 4,4'-diamino-2,2'-trifluoromethyl diphenyloxide;
63. 3,3'-diamino-5,5'-trifluoromethyl diphenyloxide;
64. 4,4'-trifluoromethyl-2,2'-diaminobiphenyl;
65. 4,4'-oxy-bis-[(2-trifluoromethyl) benzene amine];
66. 4,4'-oxy-bis-[(3-trifluoromethyl) benzene amine];
67. 4,4'-thio-bis-[(2-trifluoromethyl)benzene-amine];
68. 4,4'-thiobis-[(3-trifluoromethyl) benzene amine];
69. 4,4'-sulfoxyl-bis-[(2-trifluoromethyl) benzene amine;
70. 4,4'-sulfoxyl-bis-[(3-trifluoromethyl) benzene amine];
71. 4,4'-keto-bis-[(2-trifluoromethyl) benzene amine];
72. 9,9-bis(4-aminophenyl)fluorene;
73. 1,3-diamino-2,4,5,6-tetrafluorobenzene;
74. 3,3'-bis(trifluoromethyl)benzidine;
75. and the like.

Useful aliphatic diamines used in conjunction with either an aromatic diamine, or used alone as the remaining diamine of the diamine component include (but are not limited to) 1,6-hexamethylene diamine, 1,7-heptamethylene diamine, 1,8-octamethylenediamine, 1,9-nonamethylenediamine, 1,10-decamethylenediamine (DMD), 1,11-undecamethylenediamine, 1,12-dodecamethylenediamine (DDD), 1,16-hexadecamethylenediamine, 1,3-bis(3-aminopropyl)-tetramethyldisiloxane, isophoronediamine, and combinations thereof. Any cycloaliphatic diamine can also be used.

Useful dianhydrides of the present invention include aromatic dianhydrides. These aromatic dianhydrides include, (but are not limited to),
1. pyromellitic dianhydride (PMDA);
2. 3,3',4,4'-biphenyl tetracarboxylic dianhydride (BPDA);
3. 3,3',4,4'-benzophenone tetracarboxylic dianhydride (BTDA);
4. 4,4'-oxydiphthalic anhydride (ODPA);
5. 3,3',4,4'-diphenylsulfone tetracarboxylic dianhydride (DSDA);
6. 2,2-bis(3,4-dicarboxyphenyl) 1,1,1,3,3,3-hexafluoropropane dianhydride (6FDA);
7. 4,4'-(4,4'-isopropylidenediphenoxy)bis(phthalic anhydride) (BPADA);
8. 2,3,6,7-naphthalene tetracarboxylic dianhydride;
9. 1,2,5,6-naphthalene tetracarboxylic dianhydride;
10.1,4,5,8-naphthalene tetracarboxylic dianhydride;
11. 2,6-dichloronaphthalene-1,4,5,8-tetracarboxylic dianhydride;
12. 2,7-dichloronaphthalene-1,4,5,8-tetracarboxylic dianhydride;
13. 2,3,3',4'-biphenyl tetracarboxylic dianhydride;
14. 2,2',3,3'-biphenyl tetracarboxylic dianhydride;
15. 2,3,3',4'-benzophenone tetracarboxylic dianhydride;
16. 2,2',3,3'-benzophenone tetracarboxylic dianhydride;
17. 2,2-bis(3,4-dicarboxyphenyl) propane dianhydride;
18. 1,1-bis(2,3-dicarboxyphenyl) ethane dianhydride;
19. 1,1-bis(3,4-dicarboxyphenyl) ethane dianhydride;
20. bis-(2,3-dicarboxyphenyl) methane dianhydride;
21. bis-(3,4-dicarboxyphenyl)methane dianhydride;
22. 4,4'-(hexafluoroisopropylidene) diphthalic anhydride;
23. bis-(3,4-dicarboxyphenyl) sulfoxide dianhydride;
24. tetrahydrofuran-2,3,4,5-tetracarboxylic dianhydride;
25. pyrazine-2,3,5,6-tetracarboxylic dianhydride;
26. thiophene-2,3,4,5-tetracarboxylic dianhydride;
27. phenanthrene-1,8,9,10-tetracarboxylic dianhydride;
28. perylene-3,4,9,10-tetracarboxylic dianhydride;
29. bis-1,3-isobenzofurandione;
30. bis-(3,4-dicarboxyphenyl) thioether dianhydride;
31. bicyclo[2,2,2]oct-7-ene-2,3,5,6-tetracarboxylicdianhydride;
32. 2-(3',4'-dicarboxyphenyl) 5,6-dicarboxybenzimidazole dianhydride;
33. 2-(3',4'-dicarboxyphenyl) 5,6-dicarboxybenzoxazole dianhydride;
34. 2-(3',4'-dicarboxyphenyl) 5,6-dicarboxybenzothiazole dianhydride;
35. bis-(3,4-dicarboxyphenyl) 2,5-oxadiazole 1,3,4-dianhydride;
36. bis-2,5-(3',4'-dicarboxydiphenylether) 1,3,4-oxadiazole dianhydride;
37. bis-2,5-(3',4'-dicarboxydiphenylether) 1,3,4-oxadiazole dianhydride;
38. 5-(2,5-dioxotetrahydro)-3-methyl-3-cyclohexene-1,2-dicarboxylic anhydride;
39. trimellitic anhydride 2,2-bis(3',4'-dicarboxyphenyl)propane dianhydride;
40. 1,2,3,4-cyclobutane dianhydride;
41. 2,3,5-tricarboxycyclopentylacetic acid dianhydride;
42. their acid ester and acid halide ester derivatives;
43. and the like.

The dianhydride and diamine components of the present invention are particularly selected to provide the polyimide binder with specifically desired properties. One such useful property is for the polyimide binder to have a certain glass transition temperature (Tg). A useful Tg can be between and including any two of the following numbers, 250, 240, 230, 220, 210, 200, 190, 180, 170, 160, 150, 140, 130, 120, 110 and 100°C. Another useful range, if adherability is less important than other properties, is from 550, 530, 510, 490, 470, 450, 430, 410, 390, 370, 350, 330, 310, 290, 270, and 250C. In some cases, the polysiloxane diamine can be used in a higher mole ratio (compared to the second diamine) so that the polyimide binder has a lower Tg. In another case where low Tg is required, less polysiloxane diamine can be used so long as certain second diamines are chosen. Useful second diamines in this case include APB-134, APB-133, 3,4'-ODA, DADE, HAB, and many aliphatic diamines. Otherwise, not all of the dianhydrides and diamines listed above will form a low-Tg polyimide binder when used in conjunction with the minimum requisite amount of polysiloxane diamine. As such, the selection of dianhydride and second diamine component is important to customize what final properties of the polymer binder are specifically desired.

In one embodiment of the present invention, APB-134 diamine is used in combination with 4,4'-ODA as the second diamine (i.e. is used in conjunction with a polysiloxane diamine (e.g. a G-10 polysiloxane)). In this embodiment, a combination of ODPA and PMDA was used as the dianhydride component to form the polyimide binder. The binder (in its precursor polyamic acid state) was homogeneously blended with about 50 weight-percent aluminum oxide filler. The resulting composite acid was converted to a 1-mil thick, filled-polyimide film composite. The film composite had a mechanical elongation of greater than 50 percent, a thermal conductivity of about 0.7 watts/(meter*K), and a Tg of less than 200°C.

In the embodiments of the present invention, the amount of polysiloxane diamine generally used, as a portion of the diamine component, typically ranges from about 1 to 15 weight-percent. In yet another embodiment, the polysiloxane diamine is present between 3 and 5 weight-percent of the total diamine component. Generally, the relative stoichiometric quantity of-dianhydride component to diamine component, for the polyimide binders of the present invention, can be between 0.95 to 1.05.

In one embodiment of the present invention useful dianhydrides include BPADA, DSDA, ODPA, BPDA, BTDA, 6FDA, and PMDA or mixtures thereof. These dianhydrides are readily commercially available and generally provide acceptable performance. One noteworthy dianhydride is BPADA because it can produce a polyimide having excellent adhesivity and good flex life while also having a relatively low, moisture absorption coefficient.

In one embodiment of the present invention, the polyimide is synthesized by first forming a polyimide precursor (typically a polyamic acid solution). The polyamic acid is created by reacting (in a solvent system) one or more dianhydride monomers with two or more diamine monomers. So long as the thermally conductive filler is sufficiently dispersible in the polyamic acid solution, the filler can be dispersed prior to, during, or after the polyamic acid solution is created. This is generally true at least until the imidization of the polymer (i.e. solvent removal and curing) increases viscosity beyond the point where a filler material can be adequately dispersed within the binder.

In another embodiment of the present invention, the polyimide is synthesized by first forming two polyimide precursors (typically a polyamic acid solution and a polysiloxane polymer). The polyamic acid is created by reacting (in a solvent system) one or more dianhydride monomers with one or more diamine monomers. The polysiloxane polymer is prepared by reacting (in a solvent system) a polysiloxane diamine with at least one dianhydride. Later, the polyamic acid and the polysiloxane polymer are blended to form a copolyamic acid. The thermally conductive fitter can be added to the polyamic acid, the polysiloxane polymer or the copotyamic acid: This is generally true at least until the imidization of the polymer (i.e. solvent removal and curing) increases viscosity beyond the point where a filler material can be adequately dispersed within the binder.

In yet another embodiment of the present invention, the polyimide is synthesized by first forming a polyimide precursor (typically a polyamic acid solution and a polysiloxane polyimide solution). The polyamic acid is created by reacting (in a solvent system) one or more dianhydride monomers with one or more diamine monomers. The polysiloxane polyimide solution is prepared by dissolving a polysiloxane-containing soluble polyimide (e.g. General Electric, Siltem®) in a solvent system. Later, the polyamic acid and the polysiloxane polyimide solution are blended to form a polymer blend. The thermatty cond uctive fitter can be added to the polyamic acid, the polysiloxane polyimide solution or the polymer blend. This is generally true at least until the imidization of the polymer (i.e. solvent removal and curing) increases viscosity beyond the point where a filler material can be adequately dispersed within the binder.

Useful organic solvents, for the synthesis of the polyimides of the present invention, are preferably capable of dissolving the polyimide precursor materials. Such a solvent should also have a relatively low boiling point, such as below 225°C, so the polyimide can be dried at moderate (i.e., more convenient and less costly) temperatures. A boiling point of less than 210, 205, 200, 195, 190, or 180°C is preferred.

Solvents of the present invention may be used alone or in combination with other solvents (i.e., cosolvents). Useful organic solvents include: N-methylpyrrolidone (NMP), dimethyl-pyrrolidin-3-one, dimethylacetamide (DMAc), N,N'-dimethyl-formamide (DMF), dimethyl sulfoxide (DMSO), tetramethyl urea (TMU), hexamethylphosphoramide, dimethylsulfone, tetramethylene sulfone, gamma-butyrolactone, and pyridine. In one embodiment, preferred solvents include N-methylpyrrolidone (NMP) and dimethylacetamide(DMAc).

Co-solvents can also be used generally at about five to 50 weight-percent of the total solvent. Useful co-solvents include xylene, toluene, benzene, diethyleneglycol diethyl ether, 1,2-dimethoxyethane (monoglyme), diethylene glycol dimethyl ether (diglyme); 1,2-bis-(2methoxyethoxy) ethane (triglyme), bis [2-(2-methoxyethoxy) ethyl)] ether (tetraglyme), bis-(2-methoxyethyl) ether, tetrahydrofuran, propylene glycol methyl ether, propylene glycol methyl ether acetate, "Cellosolven™" (ethylene glycol ethyl ether), butyl "Cellosolve™" (ethylene glycol butyl ether), "Cellosolve™ acetate" (ethylene glycol ethyl ether acetate), and "butyl Cellosolve™ acetate" (ethylene glycol butyl ether acetate).

Ultimately, the precursor (polyamic acid) is converted into a high-temperature polyimide material having a solids content greater than about 99.5 weight percent. At some point in this process, the viscosity of the binder is increased beyond the point where the filler material can be blended with polyimide precursor. Depending upon the particular embodiment herein, the viscosity of the binder can possibly be lowered again by solvating the material, perhaps sufficiently enough to allow dispersion of the filler material into the binder.

Polyamic acid solutions can be converted to high temperature polyimides using processes and techniques commonly known in the art such as heat or conventional polyimide conversion chemistry. Such polyimide manufacturing processes have been practiced for decades. The amount of public literature on polyimide manufacture is legion and hence further discussion herein is unnecessary. Any conventional or nonconventional polyimide manufacturing process can be appropriate for use in accordance with the present invention provided that a precursor material is available having a sufficiently low viscosity to allow filler material to be mixed. Likewise, if the polyimide is soluble in its fully imidized state, filler can be dispersed at this stage prior to forming into the final composite.

Thermally Conductive Filler Component. The thermally conductive filler component of the present invention can be an inorganic material, sometimes a metal oxide, having an average size (dispersed within the polyimide binder material) in a range between (and including) any two of the following sizes: 50, 55, 60, 65, 70, 75, 80, 85, 90, 95, 100, 125, 150, 175, 200, 250, 300, 350, 400, 450, 500 and 10,000 nanometers, where at least 80, 85, 90, 92, 94, 95, 96, 98, 99 or 100 percent of the dispersed filler is within the above size range(s). Filler size can be determined by a laser particle analyzer, such as a Horiba® laser particle analyzer when the filler is dispersed in an organic solvent (optionally with the aid of a dispersant, adhesion promoter, and/or coupling agent).

In some embodiments of the present invention, if the mean particle size is smaller than 50 nanometers, the filler particles can tend to agglomerate, or become unstable, in the organic solvents preferably used in polyimide manufacturing. In another instance, if the mean particle size of the agglomerated particles exceeds 10,000 nanometers the dispersion of the filler component in the polyimide binder may be too non-homogeneous (or unsuitably large for the thickness of the composite). A relatively non-homogenous dispersion of the filler component in the binder can result in poor mechanical elongation of the composite film, poor flex life of the film, and/or low dielectric strength.

The thermally conductive filler component of the present invention is selected primarily to provide the film composite with good thermal conductivity. Since alumina is widely accepted in the industry as a useful thermally conductive filler material (especially in polymer binders), it is particularly mentioned herein. However, the present invention does anticipate the use of other fillers as thermally conductive fillers. These fillers include (but not limited to) silica, boron nitride, boron nitride coated aluminum oxide, granular alumina, granular silica, fumed silica, silicon carbide, aluminum nitride, aluminum oxide coated aluminum nitride, titanium dioxide, barium titanate and combinations thereof.

The weight loading of filler component in the polyimide binders of the present invention is generally between and including any two of the following numbers 30, 35, 40, 45, 50, 55, 60, 65, 70, 75, 80, or 85, weight percent. At these loading levels, the thermal conductivity of the composite polyimide,films can be between (and including) any two of the following numbers 0.2, 0.4, 0.5, 0.6, 0.7, 0.8, 0.9, 1.0, 1.1, 1.2, 1.3, 1.4; 1.5, 1.6, 1.7, 1.8, 1.9, 2.0, 4.0, 6.0, 8.0, 10.0, 20.0, 50.0, 100, 150 and 200 watts/(meter*K) in a film having a thickness between (and including) any two of the following numbers 2, 5, 10, 15, 20, 25, 30, 35, 40, 50, 60, 70, 80, 90, 100, 150, 200, 250 and 300 microns.

In many instances, commercially available low-Tg polyimide binder materials do not readily accept high filler loadings (e.g. thermally conductive filler loadings of 30 weight-percent or higher). For example, a polyimide derived from PMDA/ODPA//APB-134/4,4'-ODA typically has a glass transition temperature of less than 250°C and is generally regarded as being a useful polyimide sheet adhesive. However this composition, when loaded with about 30 to 50 weight-percent aluminum oxide filler, can have a mechanical elongation of less than 2 percent when a 1-mil thick film is made. This property is in stark contrast to that same polyimide made without the filler where the polyimide has a mechanical elongation of greater than 8 or 10 percent. In another example, where the polyimide is derived from PMDA/4,4'-ODA and loaded with about 50 weight-percent alumina filler, the polyimide composite has a mechanical elongation of greater than 10 percent. As such, the present inventor discovered a need for a low-Tg polyimide binder that would allow relatively high amounts of thermally conductive filler to be added to it while maintaining good mechanical properties. A composite film having these characteristics can provide the user with a thin layer that is a good dielectric having good mechanical elongations, and having good thermal conductivity, as well as good adhesivity (i.e. laminatability) (i.e. laminatability).

The composites of the present invention can typically show lower mechanical elongation values due to the fact that laboratory scale samples are of poorer quality than commercial scale manufacturing (i.e. samples made on a full scale manufacturing line). Typically, a poor mechanical elongation film can show an elongation value between 1 and 2 percent from a lab scale sample. On a manufacturing line, this same low elongation composition may show poor mechanical elongation of less than 5 percent. This material would be brittle, and have poor utility commercially. If however a laboratory scale sample can show a mechanical elongation of greater than 5-percent, or even about 8 to 10 percent, it is typically observed that manufacturing scale matenat (of the same composition) can have a mechanical elongation of greater than 20, 30, 40, 50, 60, 70, or 80 percent. Elongation of greater than 20 percent, on manufacturing scale material, can have excellent utility to the users of flexible substrates.

Typically, the thermally conductive fillers of the present invention generally can require extensive milling and filtration to breakup unwanted particle agglomeration as is typical when attempting to disperse nanosized conventional fillers into a polymer matrix. Such milling and filtration can be costly and may not be capable of removing all unwanted agglomerates. Indeed in one embodiment, the thermally conductive filler is dispersible, and suspendabte, at 20 weight-percent in dimethylacetamide solvent. After dispersing and suspending the filler into the solvent (with a high shear mechanical force) less than 15, 10, 8, 6, 4, 2 or 1 weight-percent of the filler precipitated out of solution when kept at rest at 20°C for 72 hours.

Incorporating the Filler into a Polyimide Matrix. The thermally conductive polyimide sheet adhesive films of the present invention can be produced by combining diamine and dianhydride monomers together, in the presence of a polar aprotic solvent, to form a polyamic acid solution (also called a polyamic acid solution). The dianhydride and diamine monomers are typically combined in a molar ratio of aromatic dianhydride monomer to aromatic diamine monomer of from about 0.90 to 1.10. Molecular weight of the polyamic acid can be adjusted by adjusting the molar ratio of the dianhydride and diamine monomers.

In one embodiment, the polyamic acid solution contains polyamic acid dissolved in a polar aprotic solvent at a concentration in a range between (and including) any two of the following percentages: 5,10,12, 15, 20, 25, 27, 30, 40, 45, 50, 55, or 60 (%) percent by weight. In one embodiment, the solvent content of the polyamic acid solution is in a range of from about 10, 12, 14, 16, 18, 20, or 22, to about 24, 26, 28 or 30 weight (%) percent solvent.

In one embodiment, nano-sized filler in accordance with the present invention (i.e. alumina oxide particles) are first dispersed in a solvent to form a slurry. The slurry is then dispersed in the polyamic acid precursor solution. This mixture is referred to herein as a filled polyamic acid casting solution. The concentration of filler to polyimide (in the final composite film) is typically in the range of 30, 35, 40, 45, 50, 55, 60, 65, 70, 75, 80 or 85 (%) percent by weight. As the concentration of the filler increases, the thermal conductivity of the composite polyimide also increases.

The filled polyamic acid casting solution is typically a blend of a preformed polyamic acid solution and filler. Here the filler is present in a concentration range from about 1, 3, 5, 7, 9 or 10 weight (%) percent to about 15, 20, 25, 30, 35, 40, 45 or 50 (%) weight percent or greater. In one embodiment, the filler is first dispersed in the same polar aprotic solvent used to make the polyamic acid solution (e.g. DMAc) Optionally, a small amount of polyamic acid solution may be added to the filler slurry to either increase the viscosity of the slurry, improve dispersion, or stabilize the slurry from unwanted particles agglomeration.

In one embodiment, the filler slurry is blended with a polyamic acid solution to form the filled polyamic acid casting solution. This blending operation can include high sheer mixing. In this embodiment, if the filler is present beyond 85 weight-percent in the final film, the film can be too brittle and may not be sufficiently flexible to form a freestanding, mechanically tough, flexible sheet. Moreover, if the filler is present at a level of less than 50 weight-percent, the films formed therefrom may not be sufficiently thermally conductive.

The polyamic acid casting solution mentioned above can optionally further comprise additional additives, including processing aids (e.g., oiigomers), antioxidants, light stabilizers, flame retardant additives, antistatic agents, heat stabilizers, ultraviolet absorbing agents, other inorganic and organic fillers or various reinforcing agents. Common inorganic fillers include corona resistant fillers, like fumed metal oxides, and electrically conductive fillers like metals. Other common fillers include silicon carbide, diamond, dicalcium phosphate, polyaniline, polythiophene, polypyrrole, polyphenylenevinylene, polydialkylfluorenes, carbon black, graphite, and electrically conductive polymers.

In one embodiment of the present invention, the polyamic acid casting solution is cast, or applied onto, a support such as an endless metal surface or rotating drum. A wet film then formed by heating the solution to remove some of the solvent. The wet film, sometimes called a 'green' film is converted into a self-supporting film by baking at an appropriate temperature where the solids are from 60, 65, 70, 75, 80, 85, and 90 weight percent. The green film is separated from the support and cured in a tentering process with continued thermal and radiation curing. This process can produce a film that is a relatively highly cured polyimide film having a weight-percent solids of above 98.5% or higher.

Other useful methods for producing polyimide films in accordance with the present invention can be found in U.S. Patent Nos. 5,166,308 and 5,298,331 and are incorporated by reference into this specification for all teachings therein. Numerous variations are also possible such as:
(a) A method wherein the diamine monomers and dianhydride monomers are preliminarily mixed together and then the mixture is added in portions to a solvent while stirring.
(b) A method wherein a solvent is added to a stirring mixture of diamine and dianhydride monomers (contrary to (a) above).
(c) A method wherein diamines are exclusively dissolved in a solvent and then dianhydrides are added thereto at such a ratio as allowing to control the reaction rate.
(d) A method wherein the dianhydride monomers are exclusively dissolved in a solvent and then amine components are added thereto at such a ratio to allow control of the reaction rate.
(e) A method wherein the diamine monomers and the dianhydride monomers are separately dissolved in solvents and then these solutions are mixed in a reactor.
(f) A method wherein the polyamic acid with excessive amine component and another polyamic acid with excessive anhydride component are preliminarily formed and then reacted with each other in a reactor, particularly in such a way as to create a non-random or block copolymer.
(g) A method wherein a specific portion of the amine components and dianhydride components are first reacted and then residual dianhydride monomer is reacted, or vice versa.
(h) A method wherein the filler particles are dispersed in a solvent and then injected into a stream of polyamic acid to form a filled polyamic acid casting solution and then cast to form a green film. This can be done with a high molecular weight polyamic acid or with a low molecular weight polyamic acid which is subsequently chain extended to a high molecular weight polyamic acid.
(i.) A method wherein the components are added in part or in whole in any order to either part or whole of the solvent, also where part or all of any component can be added as a solution in part or all of the solvent.
(j) A method of first reacting one of the dianhydride monomers with one of the diamine monomers giving a first polyamic acid, then reacting the other dianhydride monomer with the other amine component to give a second polyamic acid, and then combining the amic acids in any one of a number of ways prior to film formation.

It is preferable to use a heating system having a plurality of heating sections or zones. It is also generally preferable that the maximum heating temperature be controlled to give a maximum air (or nitrogen) temperature of the ovens from about 200 to 600°C, more preferably from 350 to 500°C. By regulating the maximum curing temperature of the green film within the range as defined above, it is possible to obtain a polyimide film that has excellent mechanical strength, adhesive character, and thermal dimensional stability.

Alternatively, heating temperatures can be set to 200-600°C while varying the heating time. Regarding the curing time, it is preferable that the polyimide films of the present invention be exposed to the maximum heating temperature for about 1, 2, 3, 5, 10, 15, 20, 25, 30, 35, 40, 45 or 50 seconds to about 60, 70, 80, 90, 100, 200, 400, 500, 700, 800, 900, 1000, 1100 or 1200 seconds (thelength of timedepending on heating temperature). The heating temperature may be changed stepwise so as not to wrinkle the film by drying to quickly.

The thickness of the polyimide film may be adjusted depending on the intended purpose of the film or final application specifications. Depending upon the design criteria of any particular embodiment chosen, the film thickness can be in a range between (and including) any two of the following film thicknesses: 5,8, 10,15, 20, 25, 30, 35, 40, 45, 50, 60, 80, 100, 125, 150, 175, 200, 300, 400 and 500 microns. In one embodiment, the thickness is from about 12 to about 125 microns and is preferably from 15 to 25 microns.

As used herein, the term 'thermally conductive' means a composite material possessing the physical property of being able to conduct heat at a level greater than of equal to about 0.2 watts/(meter*K) on a 1-mil film basis, and in some cases greater than 0.7 watts/(meter*K). In the case of a film, thermal conductivity is typically measured using a film sample that is about one thousands of an inch thick (~1.0 mil or 25 microns) and is round in shape (about ½ inches in diameter). The device used to measure the samples was a Netzsch® Xenon Lamp Flash Analyzer, model LFA-447 having an InSb IR sensor. The thermal conductivity reference used for these samples was a sample of Pyrex® 7740. The polyimide film composite samples were first sputtered with about 1000 angstroms of gold on both sides, then sprayed on both sides with about 1000 angstroms of graphite (to blacken the sample). The circulating bath was set at about 25°C. The wattage selection was the 'short' selection (about 304 volts) and the exposure time was about 20-30 milliseconds. To equate the thermal conductivity of the sample, the Cowan equation was used.

As used herein, the term 'dielectric strength' is a term used to describe the amount of voltage a material can withstand in short instance of time. Dielectric strength of one-mil thick, conventional, unfilled (non-corona resistant) polyimide film is typically about 7,800 volts/mil. Conventional thermally conductive films generally provide a dielectric strength of about 3,000 to 6,000 volts/mil. In one embodiment, one class of films according to the present invention is defined as having a dielectric strength greater than 5,000 volts/mil. As such, these materials are commonly referred to as a 'dielectric'.

As used herein, the term 'elongation' is used to describe a film's ability to stretch under physical pulling force without breaking. In an elongation test, a film sample is placed between two holding clamps. The clamps are pulled in opposite directions. The distance the clamps are able to travel before the material breaks determines the amount of mechanical elongation present in the film. The higher mechanical elongation a film has, the easily it can be laminated to a metal foil to form a Polyimide-metal laminate. Low mechanical elongation film can be brittle, and can fracture during processing. Typical one-mil thick polyimide (without filler) generally has an elongation of about 90 to 130 % (e.g. DuPont KAPTON HN®). Other films with some filler (i.e. less than 50 weight percent), like DuPont KAPTON MTⓇ, generally have a mechanical elongation of about 50 to 90 % from a manufacturing scale unit. In one embodiment, one class of high thermally conductive films (with high filler loading) according to the present invention has a mechanical elongation of greater than 50, 55, 60, 65, 70, 75, 80, 85, 90, 95 or 100 percent.

The composites of the present invention are excellent dielectrics that can be useful in forming a polyimide-metal laminate, or may also be used as a stand-alone film in other designs requiring good thermal conductivity from a dielectric.

In a further embodiment, the polyamic acid filler composite slurry may be coated on a fully cured polyimide base film or directly on a metal substrate and subsequently imidized by heat treatment. The polyimide base film may be prepared by either a chemical process or thermal conversion process and may be surface treated (e.g. by chemical etching, corona treatment, laser etching etc., to improve adhesion).

A single polyimide metal-clad of the present invention comprises a flexible polyimide layer which adheres to a metal foil such as copper, aluminum, nickel, steel or an alloy containing one or more of these metals. The polyimide layer adheres firmly to the metal and has a peel strength of 2 pounds per linear inch and higher. The metal may be adhered to one or both sides of the polyimide layer.

The polyimide adhesive films of the present invention will bond to' copper at from about 2 pounds per linear inch to about 15 pounds per linear inch. The bonding temperature is typically between 150°C and 350°C. In one embodiment, a polyimide adhesive of the present invention bonded to copper with a bonding strength of about 4 pounds per linear inch, a bonding temperature of 200°C, and a glass transition temperature of about 165 to 185°C.

As used herein, the term "conductive layers" and "conductive foils" are meant to be metal layers or metal foils. Conductive foils are typically metal foils. Metal foils do not have to be used as elements in pure form; they may also be used as metal foil alloys, such as copper alloys containing nickel, chromium, iron, and other metals. Other useful metals include, but are not limited to; copper, steel (including stainless steel),aluminum, brass, a copper molybdenum alloy, Kovar®, Invar®, a bimetal, a trimetal, a tri-metal derived from two-layers of copper and one layer of Invar®, and a trimetal derived from two layers of copper and one layer of molybdenum.

The conductive layers may also be metal alloys of metals which can be applied to the polyimides of the present invention via a sputtering step, optionally followed by an electro-plating step. In these types of processes, a metal seed coat layer is first sputtered onto the polyimide adhesive. Finally, a thicker coating of metal is applied to the seed coat via electroplating or electro-deposition. Such sputtered metal layers may also be hot pressed above the glass transition temperature of the polymer for enhanced peel strength.

A polyimide-metal laminate in accordance with the present invention may also be formed by applying a polyamic acid to metal foil, and then subsequently drying and curing the polyamic acid to form a polyimide. These single-side laminates can be laminated together (for instance where the polyimide sides are place in contact with one another) to form a double metal laminate. Particularly suitable metallic substrates are foils of rolled annealed (RA) copper, electro-deposited copper (ED copper) or rolled annealed copper alloy. In many cases, it has proved to be of advantage to treating the metallic substrate before coating. This treatment may include, but is not limited to, electro-deposition or immersion-deposition on the metal of a thin layer of copper, zinc, chrome, tin, nickel, cobalt, other metals, and alloys of these metals. The pretreatment may consist of a chemical treatment or a mechanical roughening treatment. It has been found that this pretreatment enables the adhesion of the polyimide layer and, hence, the peel strength to be further increased. Apart from roughening the surface, the chemical pretreatment may also lead to the formation of metal oxide groups or organic groups capable of bonding with polyimide or organic groups capable of bonding with polyimide, enabling the adhesion of the metal to the polyimide layer to be further increased. This pretreatment may be applied to both sides of the metal; enabling enhanced adhesion to substrates on both sides.

A polyimide metal-clad of the present invention can also be prepared by laminating copper foil to one or both sides of an adhesive coated dielectric polyimide film. The construction can also be made by laminating adhesive coated copper foil to both sides of a dielectric polyimide film or to an adhesive coated dielectric polyimide film.

In another embodiment, the thermally conductive polyimide composite can be a discrete layer in a multi-polyimide layer film construction. For instance, the thermally conductive layer can be coextruded as one layer in a two-layer polyimide, or as the outside layers in a three-layer polyimide (see also United States Patent No. 5,298,331, herein incorporated by reference).

In another embodiment, the polyimides of the present invention can be used to construct a planar transformer component. These planar transformer components are commonly used in power supply devices. In yet another embodiment, the polyimide adhesives of the present invention may be used with thick metal foils (like lnconel) to form flexible heaters. These heaters are typically used in automotive and aerospace applications.

Generally, the thermally conductive polyimide film composites of the present invention are useful as a single-layer base substrate (a dielectric) in an electronic device requiring good thermal conductivity of the dielectric material. Examples of such electronic devices include (but are not limited) thermoelectric modules, thermoelectric coolers, DC/AC and AC/DC inverters, DC/DC and AC/AC converters, power amplifiers, voltage regulators, igniters, light emitting diodes, IC packages, and the like.

The advantageous properties of this invention can be observed by reference to the following examples that illustrate, but do not limit, the invention. All parts and percentages are weight unless other wise indicated.

The advantageous properties of this invention can be observed by reference to the following examples that illustrate, but do not limit, the invention. All parts and percentages are by weight unless other wise indicated.

### EXAMPLES

The advantageous properties of this invention can be further understood by reference to the following examples, which illustrate, but do not limit, the invention. The compounds used in the examples include:

### EXAMPLE 1

Approximately 0.1 moles of polysiloxane diamine (G8) and 0.1 moles of pyromellitic dianhydride (PMDA) were polymerized in DMAc solvent to form a polysiloxane-containing polyamic acid. The reaction was carried out at room temperature with sufficient mixing to allow the powders to dissolve and polymerize in the solution to form a relatively uniform polymer. The polysiloxane-containing polyamic acid was dissolved in the solvent at about 25.4 weight-percent polymer.

In a second vessel, a second polyamic acid was prepared. The second polyamic acid was derived from PMDA and ODPA dianhydride, and RODA diamine. The weight percent, in DMAc, of the second polyamic acid (PMDA/ODPA//RODA) was about 17 weight percent in solution.

Both polyamic acid solutions were allowed to stir over several hours. Next, a portion of each of the two polyamic acids was blended together to form a copolyamic acid containing about 4.2 weight percent polysiloxane diamine of the total diamine component. The proportion of the first acid (the polysiloxane-containing acid) to the second acid was about 15 weight-percent of the first acid to about 85 weight-percent of the second polyamic acid. The solids percent of the prepared copolyamic acid was about 18 weight-percent in DMAc.

In another vessel, a metal-oxide liquid dispersion containing alumina oxide powder dispersed in DMAc was prepared. The dispersion contained about 55 weight-percent alumina-oxide powder. This dispersion was milled in a kinetic mixer until the partides had an average particle size of approximately 1-2 microns.

The metal oxide dispersion, as well as additional PMDA solution (at about 6 weight-percent solution), was added to the copolyamic acid and uniformly blended until the weight-percent loading of alumina oxide to the total amount of polymer was approximately 50 weight-percent. This mixed polymer casting solution was blended until it was relatively homogeneous and then it was cast (using a slot-die) onto a flat metal surface to form a wet-film.

The wet-film was heated over approximately 30 minutes at a temperature of about 90°C to 150°C until the solids percent of the wet-film was increased from about 18 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film and mechanical modulus were performed using ASTM D882. The data is recorded in Table 1.

### EXAMPLE 2

In a vessel, a polyamic acid was prepared. The polyamic acid was derived from PMDA and 4,4'-ODA. The weight percent, in DMAc, of the polyamic acid (PMDA/4,4'-ODA) was about 19 weight percent in solution.

The polyamic acid solution was allowed to stir over several hours. Next, a solution of polysiloxane-containing polyimide (General Electric Siltem®) was added to the polyamic acid. The polysiloxane-containing polyimide solution was added so that the weight-percent to the solids of the polyamic acid was about 25 weight-percent and where the final acid contained about 3.5 weight-percent potysitoxanediamine of the total diamine component.

In another vessel, a carbon powder was dispersed in DMAc. The dispersion contained about 30 weight-percent carbon powder. This dispersion was milled in a kinetic mixer until the particles had an average particle size of approximately 1-2 microns.

The carbon metal dispersion, as well as additional PMDA solution at about 6 weight-percent solution, were added to the polyamic acid/polysiloxane-polyimide blend and further blended until the weight-percent loading of carbon to the total polymer was approximately 35 weight-percent. This mixed polymer casting solution was relatively homogeneous and was cast (using a slot-die) onto a flat metal surface to form a wet-film.

The wet-film was heated over approximately 30 minutes at a temperature of about 90°C to 150°C until the solids percent of the wet-film was increased from about 14 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film were performed using ASTM D882. The data is recorded in Table 1.

### EXAMPLE 3

In a vessel; a polyamic acid was prepared. The polyamic acid was derived from PMDA and 4,4'-ODA. The weight percent, in DMAc, of the polyamic acid (PMDA/4,4'-ODA) was about 19 weight percent in solution. The polyamic acid solution was allowed to stir over several hours.

In a second vessel, approximately 0.1 moles of polysiloxane diamine (G8) and 0.1 moles of pyromellitic dianhydride (PMDA) were polymerized in DMAc solvent to form a polysiloxane-containing polyamic acid. The reaction was carried out at room temperature with sufficient mixing to allow the powders to dissolve and polymerize in the solution to form a relatively uniform polymer. The polysiloxane-containing polyamic acid was dissolved in the solvent at about 25.4 weight-percent polymer.

Both polyamic acid solutions were allowed to stir over several hours. Next, a portion of each of the two polyamic acids was blended together to form a copolyamic acid containing about 3.5 weight-percent polysiloxane diamine of the total diamine component. The proportion of the first acid (the polysiloxane-containing acid) to the second acid was about 25 weight-percent of the first acid to about 75 weight-percent of the second polyamic acid. The solids percent of the prepared copolyamic acid was about 21 weight-percent in DMAc.

In yet another vessel, a boron-nitride liquid dispersion containing boron nitride powder dispersed in DMAc was prepared. The dispersion contained about 50 weight-percent boron-nitride powder. This dispersion was milled in a kinetic mixer until the particles had an average particle size of approximately 2-5 microns.

The boron-nitride dispersion, as well as additional PMDA solution at about 6 weight-percent solution, were added to the copolyamic acid and uniformly blended until the weight-percent loading of boron-nitride to the polymer was approximately 50 weight-percent. This mixed polymer casting solution was blended until it was relatively homogeneous and then it was cast (using a slot-die) onto a flat metal surface to form a wet-film.

The wet-film was heated over approximately 30 minutes at a temperature of about 90°C to 150°C until the solids percent of the wet-film was increased from about 12 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film were performed using ASTM D882. The data is recorded in Table 1.

### EXAMPLE 4

In a vessel, a polyamic acid was prepared. The polyamic acid was derived from PMDA and 4,4'-ODA. The weight percent, in DMAc, of the polyamic acid (PMDA/4,4'-ODA) was about 19 weight percent in solution. The polyamic acid solution was allowed to stir over several hours.

In a second vessel, approximately 0.1 moles of polysiloxane diamine (G8) and 0.1 moles of pyromellitic dianhydride (PMDA) were polymerized in DMAc solvent to form a polysiloxane-containing polyamic acid. The reaction was carried out at room temperature with sufficient mixing to allow the powders to dissolve and polymerize in the solution to form a relatively uniform polymer. The polysiloxane-containing polyamic acid was dissolved in the solvent at about 25.4 weight-percent polymer.

Both polyamic acid solutions were allowed to stir over several hours. Next, a portion of each of the two polyamic acids was blended together to form a copolyamic acid containing about 3.5 weight-percent polysiloxane diamine of the total diamine component. The proportion of the first acid (the polysiloxane-containing acid) to the second acid was about 25 weight-percent of the first acid to about 75 weight-percent of the second polyamic acid. The solids percent of the prepared copolyamic acid was about 21 weight-percent in DMAc.

In yet another vessel, a fumed silica liquid dispersion containing fumed silica flakes dispersed in DMAc was prepared. The dispersion contained about 8 weight-percent fumed-silica flakes. This dispersion was milled in a kinetic mixer until the particles had an average particle size of approximately 10-20 nanometers.

The fumed-silica dispersion, as well as additional PMDA solution at about 6 weight-percent solution, were added to the copolyamic acid and uniformly blended until the weight-percent loading of fumed silica to the polymer was approximately 25 weight-percent. This mixed polymer casting solution was relatively homogeneous and was cast (using a slotdie) onto a flat metal surface to form a wet-film.

The wet-film was heated over approximately 30 minutes at a temperature of about 90°C to 150°C until the solids percent of the wet-film was increased from about 12 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film were performed using ASTM D882. The data is recorded in Table 1.

### EXAMPLE 5

Approximately 0.1 moles of polysiloxane-diamine (G8) and 0.1 moles of pyromellitic dianhydride (PMDA) were polymerized in DMAc solvent to form a polysiloxane-containing polyamic acid. The reaction was carried out at room temperature with sufficient mixing to allow the powders to dissolve and polymerize in the solution to form a relatively uniform polymer. The polysiloxarie-containing polyamic acid was dissolved in the solvent at about 25.4 weight-percent polymer.

In a second vessel, a second polyamic acid was prepared. The second polyamic acid was derived from PMDA and ODPA dianhydride, and RODA diamine. The weight percent, in DMAc, of the second polyamic acid (PMDA/ODPA//RODA) was about 17 weight percent in solution.

Both polyamic acid solutions were allowed to stir over several hours. Next, a portion of each of the two polyamic acids was blended together to form a copolyamic acid containing about 4.2 weight percent polysiloxane diamine of the total diamine component. The proportion of the first acid (the polysiloxane-containing acid) to the second acid was about 15 weight-percent of the first acid to about 85 weight-percent of the second polyamic acid. The solids percent of the prepared copolyamic acid was about 18 weight-percent in DMAc.

In another vessel, a metal-oxide liquid dispersion containing boron nitride powder dispersed in DMAc was prepared. The dispersion contained about 55 weight-percent boron nitride powder. This dispersion was milled in a kinetic mixer until the particles had an average particle size of approximately 1-2 microns.

The metal oxide dispersion, as well as additional PMDA solution (at about 6 weight-percent solution), was added to the copolyamic acid and uniformly blended until the weight-percent loading of boron nitride to the total amount of polymer was approximately 50 weight-percent. This mixed polymer casting solution was blended until it was relatively homogeneous and then it was cast (using a slot-die) onto a flat metal surface to form a wet-film.

The wet-film was heated over approximately 30 minutes at a temperature of about 90°C to 150°C until the solids percent of the wet-film was increased from about 18 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongation of the film and mechanical modulus were performed using ASTM D882. The data is recorded in Table 1.

### EXAMPLE 6

Approximately 0.1 moles of polysiloxane diamine (G8) and 0.1 moles of pyromellitic dianhydride (PMDA) were polymerized in DMAc solvent to form a polysiloxane-containing polyamic acid. The reaction was carried out at room temperature with sufficient mixing to allow the powders to dissolve and polymerize in the solution to form a relatively uniform polymer. The polysiloxane-containing polyamic acid was dissolved in the solvent at about 25.4 weight-percent polymer.

In a second vessel, a second polyamic acid was prepared. The second polyamic acid was derived from PMDA and ODPA dianhydride, and RODA diamine. The weight percent, in DMAc, of the second polyamic acid (PMDA/ODPA//RODA) was about 17 weight percent in solution.

Both polyamic acid solutions were allowed to stir over several hours. Next, a portion of each of the two polyamic acids was blended together to form a copolyamic acid where the copolyamic acid contained approximately 1.36 weight percent polysiloxane diamine. The proportion of the first acid (the polysiloxane-containing acid) to the second acid was about 15 weight-percent of the first acid to about 85 weight-percent of the second polyamic acid. The solids percent of the prepared copolyamic acid was about 18 weight-percent in DMAc.

In another vessel, a metal-oxide liquid dispersion containing alumina oxide powder dispersed in DMAc was prepared. The dispersion contained about 55 weight-percent alumina-oxide powder. This dispersion was milled in a kinetic mixer until the particles had an average particle size of approximately 1-2 microns.

The metal oxide dispersion, as well as additional PMDA solution (at about 6 weight-percent solution), was added to the copolyamic acid and uniformly blended until the weight-percent loading of alumina oxide to the total amount of polymer was approximately 50 weight-percent. This mixed polymer casting solution was blended until it was relatively homogeneous and then it was cast (using a slot-die) onto a flat metal surface to form a wet-film.

The wet-film was heated over approximately 30 minutes at a temperature of about 90°C to 150°C until the solids percent of the wet-film was increased from about 18 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongation of the film and mechanical modulus were performed using ASTM D882. The data is recorded in Table 1.

### EXAMPLE 7

Approximately 0.1 moles of polysiloxane diamine (G8) and 0.1 moles of pyromellitic dianhydride (PMDA) were polymerized in DMAc solvent to form a polysiloxane-containing polyamic acid. The reaction was carried out at room temperature with sufficient mixing to allow the powders to dissolve and polymerize in the solution to form a relatively uniform polymer. The polysiloxane-containing polyamic acid was dissolved in the solvent at about 25.4 weight-percent polymer.

In a second vessel, a second polyamic acid was prepared. The second polyamic acid was derived from PMDA and ODPA dianhydride, and RODA diamine. The weight percent, in DMAc, of the second polyamic acid (PMDA/ODPA//RODA) was about 17 weight percent in solution.

Both polyamic acid solutions were allowed to stir over several hours. Next, a portion of each of the two polyamic acids was blended together to form a copotyamic acid where the copolyamic acid contained approximately 12.98 weight percent polysiloxane diamine. The proportion of the first acid (the polysiloxane-containing acid) to the second acid was about 15 weight-percent of the first acid to about 85 weight-percent of the second polyamic acid. The solids percent of the prepared copolyamic acid was about 18 weight-percent in DMAc.

In another vessel, a metal-oxide liquid dispersion containing alumina oxide powder dispersed in DMAc was prepared. The dispersion contained about 55 weight-percent alumina-oxide powder. This dispersion was milled in a kinetic mixer until the particles had an average particle size of approximately 1-2 microns.

The metal oxide dispersion, as well as additional PMDA solution (at about 6 weight-percent solution), was added to the copolyamic acid and uniformly blended until the weight-percent loading of alumina oxide to the total amount of polymer was approximately 50 weight-percent. This mixed polymer casting solution was blended until it was relatively homogeneous and then it was cast (using a slot-die) onto a flat metal surface to form a wet-film.

The wet-film was heated over approximately 30 minutes at a temperature of about 90°C to 150°C until the solids percent of the wet-film was increased from about 18 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongation of the film and mechanical modulus were performed using ASTM D882. The data is recorded in Table 1.

### COMPARATIVE EXAMPLE 1

In a vessel, a polyamic acid was prepared. The polyamic acid was derived from PMDA and ODPA dianhydride, and RODA diamine. The weight percent, in DMAc, of the polyamic acid (PMDA/ODPA//RODA) was about 17 weight percent in solution. The polyamic acid solution was allowed to stir over several hours.

In another vessel, a metal oxide dispersion of alumina oxide powder was prepared in DMAc solvent. The dispersion contained about 30 weight-percent alumina oxide and about 7 weight-percent of a polyamic acid (used as a dispersing aid). The dispersion was milled in a kinetic mixer until the particles had an average particle size of approximately 1-2 microns.

The metal oxide dispersion and additional PMDA solution at 6 weight-percent were added to the polyamic acid blend until the weight-percent loading of alumina oxide to the polymer was approximately 55 weight-percent. This mixed polymer casting solution was homogeneously blended and then cast (using a slot-die) onto a flat metal surface to form a wet-film.

The wet-film was heated over approximately 30 minutes at a temperature of about 90°C to 150°C until the solids percent of the wet-film was about 70 weight percent. The partially dry film was peeled from the metal surface and wound onto a roll. The roll was transported to a curing oven and processed. The curing oven was used to heat the film, and put tension on the film's edges, to form a flat, polyimide film composite. The heating took place over about 20 minutes and temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film were performed using ASTM D882. The data is recorded in Table 1.

### COMPARATIVE EXAMPLE 2

In a vessel, a polyamic acid was prepared. The polyamic acid was derived from PMDA and 4,4'-ODA. The weight percent, in DMAc, of the. polyamic acid (PMDA/4,4'-ODA) was about 20 weight percent in solution. The polyamic acid solution was allowed to stir over several hours.

In another vessel, a carbon powder was dispersed in DMAc. The dispersion containing was about 20 weight-percent carbon powder. This dispersion was milled in a kinetic mixer until the particles had an average particle size of approximately 1-2 microns.

The carbon metal dispersion, as well as additional PMDA solution at about 6 weight-percent solution, were added to the polyamic acid and further blended until the weight-percent loading of carbon'to the total polymer was approximately 35 weight-percent. This mixed polymer casting solution was relatively homogeneous and was cast (using a slot-die) onto a flat metal surface to form a wet-film.

The wet-film was heated over approximately 30 minutes at a temperature of about 90°C to 150°C until the solids percent of the wet-film was increased from about 12 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film were performed using ASTM D882. The data is recorded in Table 1.

### COMPARATIVE EXAMPLE 3

In a vessel, a polyamic acid was prepared. The polyamic acid was derived from PMDA and 4,4'-ODA. The weight percent, in DMAc, of the polyamic acid (PMDA/4,4'-ODA) was about 20 weight percent in solution. The polyamic acid solution was allowed to stir over several hours.

In another vessel, a boron-nitride liquid dispersion containing boron nitride powder dispersed in DMAc was prepared. The dispersion contained about 30 weight-percent boron-nitride powder and about 7 weight-percent of a polyamic acid (used as a dispersing aid). This dispersion was milled in a kinetic mixer until the particles had an average particle size of approximately 1-2 microns.

The boron-nitride dispersion, as well as additional PMDA solution at about 6 weight-percent solution, were added to the polyamic acid and uniformly blended until the weight-percent loading of boron-nitride to the polymer was approximately 50 weight-percent. This mixed polymer casting solution was relatively homogeneous and was cast (using a slotdie) onto a flat metal surface to form a wet-film.

The wet-film was heated over approximately 30 minutes at a temperature of about 90°C to 150°C until the solids percent of the wet-film was increased from about 12 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film were performed using ASTM D882. The data is recorded in Table 1.

### COMPARATIVE EXAMPLE 4

In a vessel, a polyamic acid was prepared. The polyamic acid was derived from PMDA and 4,4'-ODA. The weight percent, in DMAc, of the polyamic acid (PMDA/4,4'-ODA) was about 20 weight percent in solution. The polyamic acid solution was allowed to stir over several hours.

In another vessel, a fumed silica liquid dispersion containing fumed silica flakes dispersed in DMAc was prepared. The dispersion contained about 25 weight-percent fumed-silica flakes. This dispersion was milled in a kinetic mixer until the particles had an average particle size of approximately less than 1.0 microns.

The fumed-silica dispersion, as well as additional PMDA solution at about 6 weight-percent solution, were added to the polyamic acid and uniformly blended until the weight-percent loading of fumed silica to the polymer was approximately 25 weight-percent. This mixed polymer casting solution was relatively homogeneous and was cast (using a slotdie) onto a flat metal surface to form a wet-film.

The wet-film was heated over approximately 30 minutes at a temperature of about 90°C to 150°C until the solids percent of the wet-film was increased from about 12 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongations of the film were performed using ASTM D882. The data is recorded in Table 1.

### COMPARATIVE EXAMPLE 5

In a vessel, a polyamic acid was prepared. The polyamic acid was derived from PMDA and ODPA dianhydride, and RODA diamine. The weight percent, in DMAc, of the second polyamic acid (PMDA/ODPA//RODA) was about 17 weight percent in solution.

The polyamic acid solution was allowed to stir over several hours.

In another vessel, a metal-oxide liquid dispersion containing boron nitride powder dispersed in DMAc was prepared. The dispersion contained about 55 weight-percent boron nitride powder. This dispersion was milled in a kinetic mixer until the particles had an average particle size of approximately 1-2 microns.

The metal oxide dispersion, as well as additional PMDA solution (at about 6 weight-percent solution), was added to the polyamic acid and uniformly blended until the weight-percent loading of boron nitride to the total amount of polymer was approximately 50 weight-percent. This mixed polymer casting solution was blended until it was relatively homogeneous and then it was cast (using a slot-die) onto a flat metal surface to form a wet-film.

The wet-film was heated over approximately 30 minutes at a temperature of about 90°C to 150°C until the solids percent of the wet-film was increased from about 18 weight-percent to about 70 weight-percent. The partially dry film was peeled from the metal surface and wound onto a roll.

The roll was transported to a curing oven and processed. The curing oven was used to heat the film, and put tension on the film's edges, to form a flat, cured polyimide film composite. The heating took place over about 20 minutes and the temperature was uniformly ramped from about 250°C to about 400°C. The cured polyimide film composite had a solids percent greater than 98.5 weight percent.

The polyimide film composite was cut into strips measuring about ½ inch wide by 4 inches long. The strips were placed on an Instron® Tensile tester. Mechanical elongation of the film and mechanical modulus were performed using ASTM D882. The data is recorded in Table 1.

**TABLE 1**

| Film Sample | Film Modulus (kpsi) | Film Mechanical Elongation (percent) |
|---|---|---|
| EXAMPLE 1 - a 1 mil polyimide derived in part from a polysiloxane diamine and 50 weight-percent aluminum oxide | 300 | 6.9% |
| COMPARATIVE EXAMPLE 1 - a 1 mil polyimide w/ 50 weight-percent aluminum oxide and no polysiloxane diamine | 850 | 1.0% |
| EXAMPLE 2 - a 1 mil polyimide derived from PMDA and 4,4'ODA and polysiloxane diamine, having 35 weight percent carbon filler | 600 | 19.0% |
| COMPARATIVE EXAMPLE 2 - a 1 mil PMDA/4,4'-ODA polyimide having 35 weight-percent carbon | 900 | 1.0% |
| EXAMPLE 3 - a 1 mil PMDA/4,4'-ODA polyimide derived in part from a polysiloxane diamine and having 50 weight-percent boron nitride | 300 | 8.5% |
| COMPARATIVE EXAMPLE 3 - a 1 mil PMDA-4,4'-ODA polyimide having 50 weight-percent boron nitride | 850 | 1.0% |
| EXAMPLE 4 - a 1 mil derived from PMDA/4,4'-ODA and polysiloxane diamine having 25 weight-percent fumed silica | 300 | 25.0% |
| COMPARATIVE EXAMPLE 4 -a 1 mil PMDA-4,4'-ODA polyimide having 25 weight-percent fumed silica | 850 | 1.0% |
| COMPARATIVE EXAMPLE 5 -a 1 mil polyimide w/ 50 weight-percent aluminum nitride and no polysiloxane diamine | 900 | 1.0% |
| EXAMPLE 6 - a 1 mil polyimide derived in part from a low level of polysiloxane diamine (1.36 mole%) and 50 weight-percent aluminum oxide | 700 | 2.5% |
| EXAMPLE 7 - a 1 mil polyimide derived in part from a high level of polysiloxane diamine (12.98 mole%) and 50 weight-percent aluminum oxide | 300 | 7.5 |

## Claims

1. A thermally conductive polyimide film composite comprising:
A. a polyimide component derived from a dianhydride component and a diamine component wherein the diamine is selected from the group consisting of an aromatic diamines, an aliphatic diamines, cycloaliphatic diamines, or combinations thereof;
B. wherein the diamine component is derived in part from a polysiloxane diamine wherein the polysiloxane diamine is present in an amount from 1 to 15 weight-percent of the diamine component;
C. a thermally conductive filler component present in an amount between and including any two of the following numbers 30, 35, 40, 45, 50, 55, 60, 65, 70, 75, 80 and 85 weight-percent of the film composite;
D. wherein the film composite has a thickness between and including any two of the following numbers 2, 5, 10,15, 20, 25, 30, 35, 40; 50, 60, 70, 80, 90, 100, 150, 200, 250 and 300 microns.

2. The film composite of Claim 1 wherein the diamine component is derived in part from a polysiloxane diamine wherein the polysiloxane diamine is present in an amount from 3 to 5 weight-percent of the diamine component.

3. The film composite of Claim 1 wherein the siloxane moiety of the polysiloxane diamine is a repeating unit numbering from 1 to 40 units.

4. The film composite of Claim 1 wherein the polysiloxane diamine is poly(dimethylsiloxane), bis(3-aminopropyl) terminated.

5. The film composite of Claim 1 wherein the diamine component is selected from the group consisting of 2,2 bis-(4-aminophenyl) propane; 4,4'-diaminodiphenyl methane; 4,4'-diaminodiphenyl sulfide (4,4'-DDS); 3,3'-diaminodiphenyl sulfone (3,3'-DDS); 4,4'-diaminodiphenyl sulfone; 4,4'-diaminodiphenyl ether (4,4'-ODA); 3,4'-diaminodiphenyl ether (3,4'-ODA); 1,3-bis- (4-aminophenoxy) benzene (APB-134 or RODA); 1,3-bis- (3-aminophenoxy) benzene (APB-133); 1,2-bis- (4-aminophenoxy) benzene; 1,2-bis- (3-aminophenoxy) benzene; 1,4-bis-(4-aminophenoxy) benzene; 1,4-bis-(3-aminophenoxy) benzene; and combinations thereof.

6. The film composite of Claim 1 wherein the dianhydride component is selected from the group consisting of pyromellitic dianhydride (PMDA); 3,3',4,4'-biphenyl tetracarboxylic dianhydride (BPDA); 3,3',4,4'-benzophenone tetracarboxylic dianhydride (BTDA); 4,4'-oxydiphthalic anhydride (ODPA); 3,3',4,4'-diphenylsulfone tetracarboxylic dianhydride (DSDA); 2,2-bis(3,4-dicarboxyphenyl) 1,1,1,3,3,3-hexafluoropropane dianhydride (6FDA); 4,4'-(4,4'-isopropylidenediphenoxy)bis(phthalic anhydride) (BPADA); and combinations thereof.

7. The film composite of Claim 1 wherein the thermally conductive filler component is dispersed in the polyimide component, wherein the filler component has an average particle size between and including any two of the following numbers 50, 55, 60, 65, 70, 75, 80, 85, 90, 95, 100, 125, 150, 175, 200, 250, 300, 350, 400, 450, 500 and 10,000 nanometers, and wherein at least 80, 85, 90, 92, 94, 95, 96, 98, 99 or 100 percent of the dispersed filler is within the above size range(s).

8. The film composite of Claim 1 wherein the thermally conductive filler component is selected from the group consisting of aluminum oxide, silica, boron nitride, boron nitride coated aluminum oxide, granular alumina, granular silica, fumed silica, silicon carbide, aluminum nitride, titanium dioxide, dicalcium phosphate, barium titanate and combinations thereof.

9. The film composite of Claim 1 wherein the polyimide component has a glass transition temperature between and including any two of the following numbers 250, 240, 230, 220, 210, 200, 190, 180, 170, 160, 150, 140, 130, 120, 110 and 100°C.

10. The film composite of Claim 1 wherein the film composite has a thermal conductivity between and including any two of the following numbers 0.2, 0.4, 0.5, 0.6, 0.7, 0.8, 0.9, 1.0, 1.1, 1.2, 1.3,1.4, 1.5, 1.6, 1.7, 1.8, 1.9, 2.0, 4.0, 6.0, 8.0, 10.0, 20.0, 50.0, 100, 150 and 200 watts/(meter*K).

11. The film composite of Claim 1 further comprising a metal wherein the film composite and the metal.form a laminate.

12. The film composite of Claim 1 wherein the film composite has a metal foil adhered on one side.

13. The film composite of Claim 1 wherein the film composite has a metal foil adhered on both sides.
